# EUROPEAN PATENT APPLICATION

(11) **EP 3 089 492 A1**
(43) Date of publication of application: **02.11.2016**
(21) Application number: 14873230.8
(22) Date of filing: 12.12.2014
(51) Int. Cl.: H04W 8/26, H04W 84/18

(54) **WIRELESS COMMUNICATION DEVICE, WIRELESS COMMUNICATION NETWORK, AND IDENTIFICATION-NUMBER SETTING METHOD**

(30) Priority: 27.12.2013 JP 2013270781
(71) Applicant: NEC Corporation, Tokyo 108-8001 (JP)
(72) Inventor: PAKU, Soran, Tokyo 108-8001 (JP)
(74) Representative: Glawe, Delfs, Moll
(86) International application number: PCT/JP2014/006214
(87) International publication number: WO 2015/098029

(57) **Abstract**

In order to solve the problem that the cost of implementing a wireless communication network that uses wireless communication devices that perform point-to-point wireless communication has not been sufficiently reduced, this wireless communication network uses a wireless communication device that performs point-to-point wireless communication with at least one other communication device wherein when a prescribed signal is inputted, said wireless communication device allocates a prescribed identification number to the other communication device.

## Description

### [Technical Field]

The present invention relates to a wireless communication device, a wireless communication network, and an identification-number setting method, and more particularly, to a wireless communication device, a wireless communication network, and an identification-number setting method for allocating IP addresses to devices constituting a network.

### [Background Art]

In a typical wireless communication network, there is known a configuration in which a DHCP server is installed in a network in order to allocate an Internet Protocol (IP) address to each of wireless communication devices constituting the network. DHCP is an abbreviation of Dynamic Host Configuration Protocol.

PTL 1 discloses a wireless communication network in which a DHCP server is installed. Fig. 11 is a configuration diagram of the wireless communication network disclosed in PTL 1.

As illustrated in Fig. 11, the wireless communication network disclosed in PTL 1 is provided with a router 501, a wireless LAN access point terminal 502, and wireless LAN terminals 503-1, 503-2, and 503-3. LAN is an abbreviation of Local Area Network. The wireless LAN terminals 503-1, 503-2, and 503-3 are connected to the router 501 via a wireless LAN 506, namely, via a radio link or the like.

The router 501 is provided with a DHCP server 504. The DHCP server 504 in the router 501 allocates IP addresses to the wireless LAN access point terminal 502, and to the wireless LAN terminals 503-1, 503-2, and 503-3. The wireless LAN terminals 503-1, 503-2, and 503-3 are respectively provided with DHCP client functional units 505-1, 505-2, and 505-3, and acquire IP addresses from the DHCP server 504. The wireless LAN terminals 503-1, 503-2, and 503-3 communicate with an external network via the wireless LAN access point terminal 502 or via the router 501, with the use of the acquired IP addresses.

As described in the aforementioned configuration and operation, in the wireless communication network disclosed in PTL 1, a DHCP server automatically allocates an IP address to each of the wireless terminals 503-1, 503-2, and 503-3. As a result, each of the wireless terminals 503-1, 503-2, and 503-3 can communicate with an external network via the wireless LAN access point terminal 502 or via the router 501.

PTL 2 also discloses a communication network in which a DHCP server is installed. The DHCP server in the communication network disclosed in PTL 2 stores in advance IP addresses that do not overlap IP addresses stored in another DHCP server device. When an IP address allocation request is received from a client terminal, the DHCP server allocates a stored IP address to the client terminal. As a result, in the communication network disclosed in PTL 2, it is possible to prevent setting of a same IP address to client terminals in an overlapping manner.

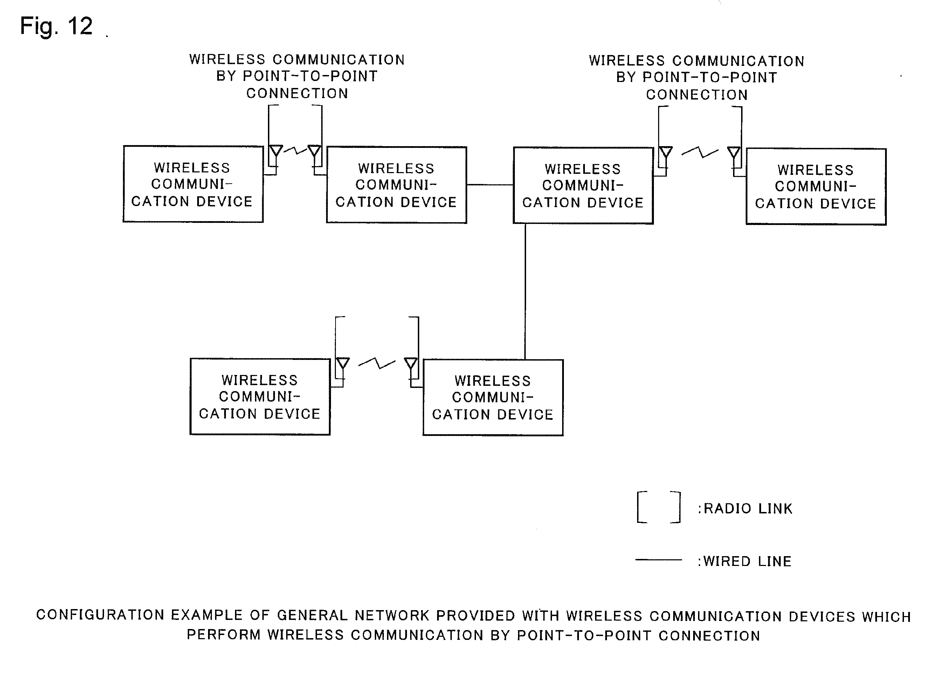

As illustrated in Fig. 12, as one of typical wireless communication networks, there is known a wireless communication network provided with wireless communication devices which perform wireless communication with an adjacent wireless communication device by use of point-to-point connection. Fig. 12 is a diagram illustrating a configuration example of a typical wireless communication network provided with wireless communication devices which perform wireless communication with an adjacent wireless communication device by point-to-point connection. In the aforementioned wireless communication network, it is not necessary to provide a cable between wireless communication devices which perform wireless communication by point-to-point connection. This makes it possible to configure a network by reducing the cost required to form a new network.

### [Citation List]

### [Patent Literature]

PTL 1: Japanese Laid-open Patent Publication No. 2008-78990
PTL 2: Japanese Laid-open Patent Publication No. 2012-249213

### [Summary of Invention]

### [Technical Problem]

However, in a network provided with wireless communication devices which perform wireless communication by point-to-point connection, it is necessary to additionally provide a DHCP server, as is the case with the communication networks disclosed in PTL 1 and PTL 2, in order to allocate an IP address to each of the wireless communication devices. Because of the necessity of additionally providing a DHCP server, the aforementioned network provided with wireless communication devices which perform wireless communication by point-to-point connection (hereinafter, referred to as a "P2P communication network") has a problem that it is difficult to sufficiently reduce the cost required to form a new network.

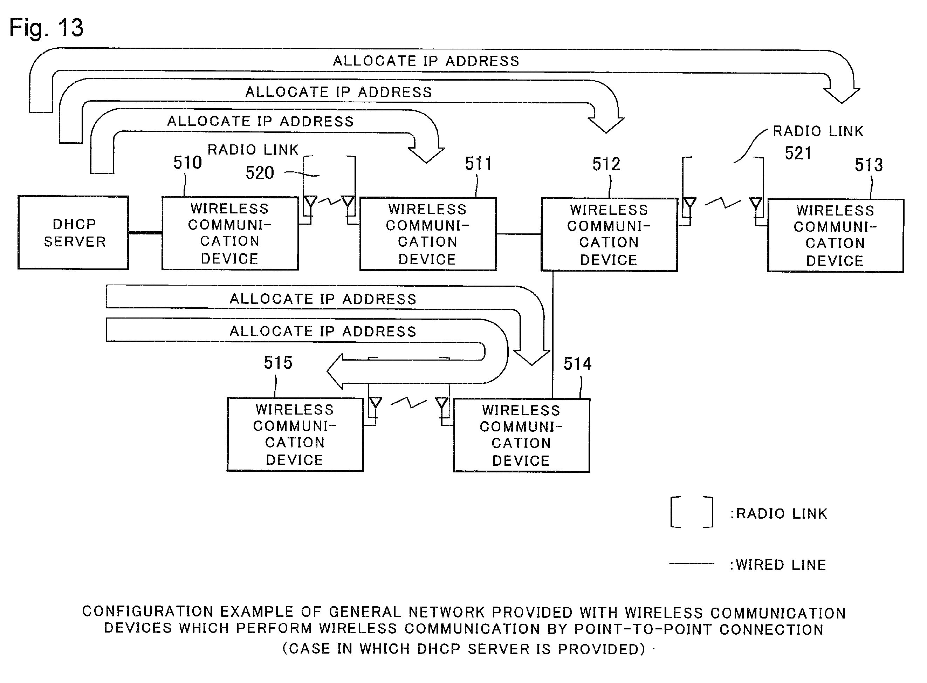

Further, a P2P communication network is typically provided with one DHCP server, and the DHCP server allocates an IP address to each of the wireless communication devices. Therefore, in a P2P communication network, the DHCP server allocates an IP address to each of the wireless communication devices via many radio links. For instance, in a P2P communication network illustrated in Fig. 13, the DHCP server allocates an IP address to a wireless communication device 513 via two radio links 520 and 521.

However, communication quality of a radio link may be degraded depending on a communication environment. This leads to a problem that in a P2P communication network in which an IP address is allocated via many radio links, it is highly likely to present a wireless communication device to which an IP address is not allocated.

For instance, the DHCP server allocates an IP address to the wireless communication device 513 via the radio links 520 and 521. When one of the radio links 520 and 521 is deteriorated, it is impossible to allocate an IP address to the wireless communication device 513. In a P2P communication network, it is highly likely to present the wireless communication device to which an IP address is not allocated. In particular, as the number of radio links between the DHCP server and the wireless communication devices increases, the aforementioned problem may be occurred more often.

The present invention aims to provide a wireless communication device, a wireless communication network, and an identification-number setting method that solves the above-described problems.

### [Solution to Problem]

To achieve the above-described object, a wireless communication device of the present invention is a wireless communication device which performs point-to-point wireless communication with at least one of other communication devices, wherein in response to an input of a predetermined signal, a predetermined identification number is allocated to the other communication device.

To achieve the above-described object, a wireless communication network of the present invention is a wireless communication network comprising: a wireless communication device which performs point-to-point wireless communication with at least one of other communication devices, wherein in response to an input of a predetermined signal, a predetermined identification number is allocated to the other communication device.

To achieve the above-described object, an identification-number setting method of the present invention is an identification-number setting method for a wireless communication means which performs point-to-point wireless communication with at least one of other communication means, the method comprising: in response to an input of a predetermined signal, allocating a predetermined identification number to the other communication means.

### [Advantageous Effects of Invention]

According to the present invention, in a wireless communication network, it is possible to sufficiently reduce the cost required to form a new network.

### [Brief Description of Drawings]

Fig. 1 is a diagram illustrating a configuration example of a wireless communication network in a first exemplary embodiment of the present invention;
Fig. 2 is a diagram illustrating a configuration example of a wireless communication device 20 provided in the wireless communication network in the first exemplary embodiment of the present invention;
Fig. 3 is a diagram (Part 1) for describing an operation of wireless communication devices provided in the wireless communication network in the first exemplary embodiment of the present invention;
Fig. 4 is a diagram (Part 2) for describing an operation of wireless communication devices provided in the wireless communication network in the first exemplary embodiment of the present invention;
Fig. 5 is a diagram illustrating another configuration example of the wireless communication network in the first exemplary embodiment of the present invention (a case in which each of the wireless communication devices is connected by a radio link);
Fig. 6 is a diagram illustrating another configuration example of the wireless communication device 20 provided in a wireless communication system in the first exemplary embodiment of the present invention;
Fig. 7 is a diagram illustrating a configuration example of a wireless communication network in a second exemplary embodiment of the present invention;
Fig. 8 is a diagram illustrating a configuration example of a wireless communication device 220 provided in the wireless communication network in the second exemplary embodiment of the present invention;
Fig. 9 is a diagram for describing an operation of wireless communication devices provided in the wireless communication network in the second exemplary embodiment of the present invention;
Fig. 10 is a diagram illustrating a configuration example of a wireless communication network in a third exemplary embodiment of the present invention;

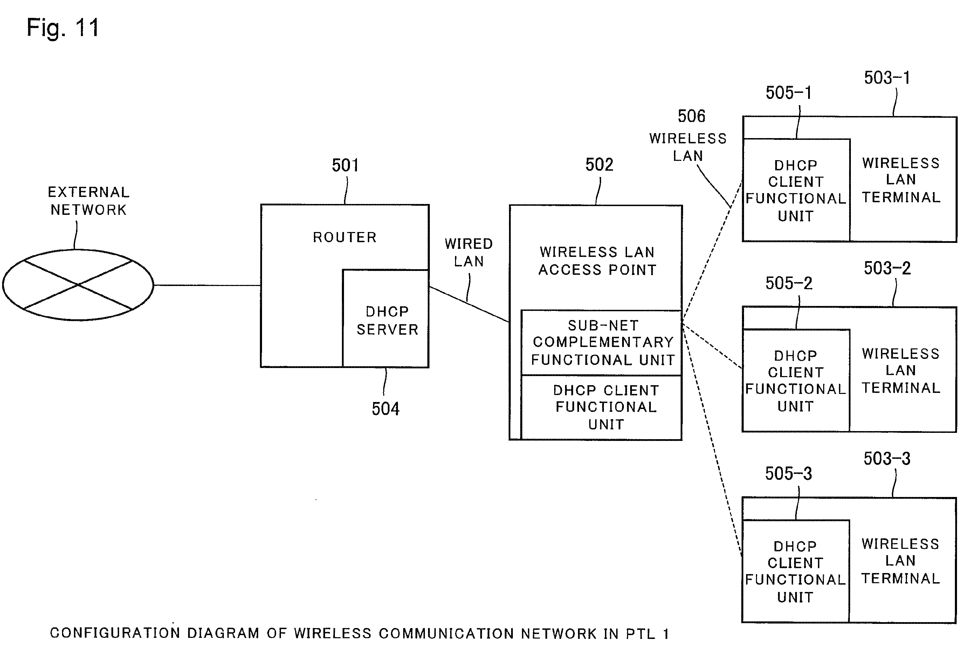

Fig. 11 is a configuration diagram of the wireless communication network disclosed in PTL 1;
Fig. 12 is a diagram illustrating a configuration example of a typical wireless communication network provided with wireless communication devices which perform wireless communication by point-to-point connection; and
Fig. 13 is a diagram illustrating a configuration example of a typical wireless communication network provided with wireless communication devices which perform wireless communication by point-to-point connection (a case in which a DHCP server is provided).

### [Description of Embodiments]

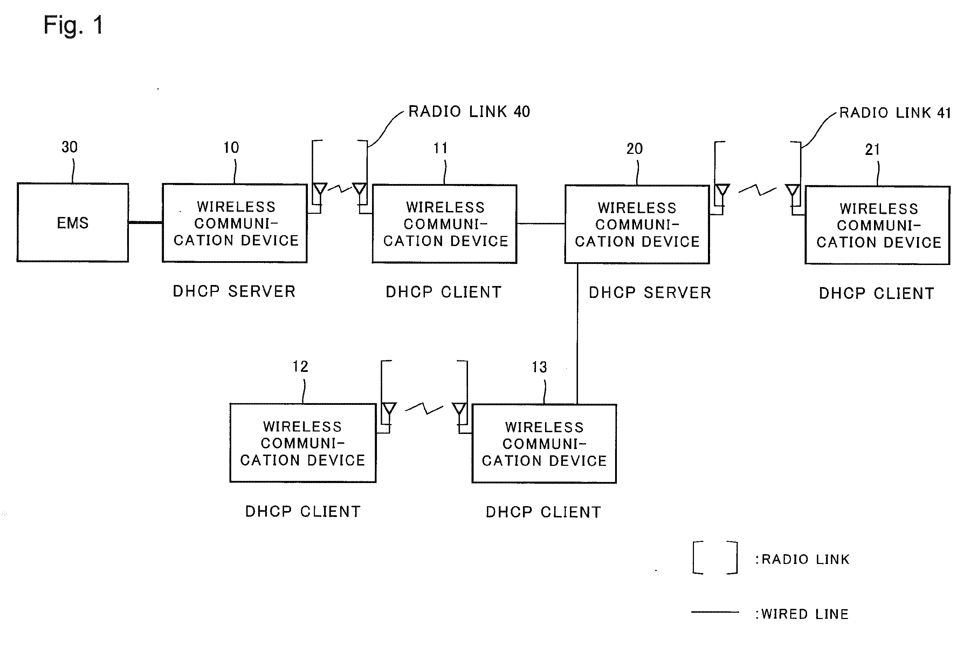

In the following, exemplary embodiments of the present invention are described in detail referring to the drawings. Note that Fig. 1 is a diagram illustrating a configuration example of a wireless communication network in a first exemplary embodiment of the present invention.

### [First Embodiment]

As illustrated in Fig. 1, a wireless communication network in the first exemplary embodiment of the present invention is a network provided with wireless communication devices 10 to 13, and 20 to 21, which perform wireless communication with an adjacent wireless communication device by point-to-point connection. In other words, the wireless communication network in the present exemplary embodiment is a P2P communication network.

Note that unlike a typical P2P communication network, the wireless communication network in the present exemplary embodiment is provided with a plurality of wireless communication devices 10 and 20, each of which has a function of a DHCP server. Each of the wireless communication devices 10 and 20 has the function of a DHCP server. Therefore, in the wireless communication network in the present exemplary embodiment, it is not necessary to have an additional DHCP server. This sufficiently reduces the cost required to form a new network.

Further, in the wireless communication network in the present exemplary embodiment, the wireless communication devices 10 and 20 having the function of a DHCP server are disposed with at least one radio link between them (in the configuration illustrated in Fig. 1, a radio link 40). The wireless communication device 10 and the wireless communication device 20 are connected in series to at least one of the other wireless communication devices (for example, the wireless communication device 21).

The wireless communication device having the function of a DHCP server (hereinafter, referred to as a "DHCP wireless communication device") is disposed as described above. Therefore, in the wireless communication network in the present exemplary embodiment, it is possible to reduce the number of radio links between a DHCP wireless communication device and the wireless communication devices, as compared with a typical P2P communication network.

For instance, as illustrated in Fig. 13, in a typical P2P communication network, the number of radio links between the DHCP server and the wireless communication device 513 is two. On the other hand, in the wireless communication network in the present exemplary embodiment, the number of radio links between the DHCP wireless communication device and the wireless communication device 21 (corresponding to the wireless communication device 513) is reduced to one i.e. a radio link 41. As a result, the DHCP wireless communication device can securely allocate an IP address to each of the wireless communication devices. Therefore, in the wireless communication network in the present exemplary embodiment, it is possible to avoid a case that an IP address is not allocated to the wireless communication device.

Further, in the wireless communication network in the present exemplary embodiment, the DHCP wireless communication device allocates an IP address only when a request is received from a predetermined wireless communication device assigned to the instant DHCP wireless communication device so as to avoid a case that two or more DHCP wireless communication devices redundantly allocate an IP addresses to the wireless communication device. The aforementioned request is a request for allocating an IP address.

In the following, the wireless communication device in the first exemplary embodiment of the present invention is described in detail.

### [Description on Configuration]

Firstly, a configuration and function of the wireless communication network in the first exemplary embodiment of the present invention are described.

### (1) Configuration of Wireless Communication Network in the First Embodiment of the Present Invention

As illustrated in Fig. 1, the wireless communication network in the present exemplary embodiment is provided with wireless communication devices 10, 11, 12, 13, 20, and 21, and an Element Management System (EMS) 30.

The wireless communication device 10 and the wireless communication device 20 are connected to each other via the radio link 40 and the wireless communication device 11. Specifically, the wireless communication device 10 is connected to the wireless communication device 11 via the radio link 40. The wireless communication device 11 is connected to the wireless communication device 20 via a wired line. Further, the wireless communication device 20 is connected to the wireless communication device 21 via a radio link. Further, the wireless communication device 20 is connected to the wireless communication device 13 via a wired line. The wireless communication device 13 is connected to the wireless communication device 12 via a radio link. The wireless communication device 10 is also connected to the EMS 30 via a wired line.

### (2) Function of Wireless Communication Devices 10, 20

The wireless communication devices 10, 20 are each provided with a function for performing wireless communication with the adjacent wireless communication devices 11, 21 by point-to-point connection, respectively.

Further, the wireless communication devices 10, 20 are provided with the function of a DHCP server. In response to a request for an IP address from the wireless communication devices 11 to 13, and 21, the wireless communication devices 10, 20 allocate an IP address to the wireless communication device that transmits the request. Note that the wireless communication devices 10, 20 determine whether the wireless communication device that transmits a request for allocating an IP address is a predetermined device assigned to the wireless communication devices 10, 20 to avoid a case that both of the wireless communication devices 10 and 20 redundantly allocate an IP addresses to the wireless communication device 11 and the like. When it is determined that the wireless communication device is the predetermined device, the wireless communication devices 10, 20 allocate an IP address. A method for determining whether the wireless communication device is the predetermined device will be described later in detail in the section [Description on Operation].

### (3) Configuration of Each Unit Constituting Wireless Communication Devices 10, 20

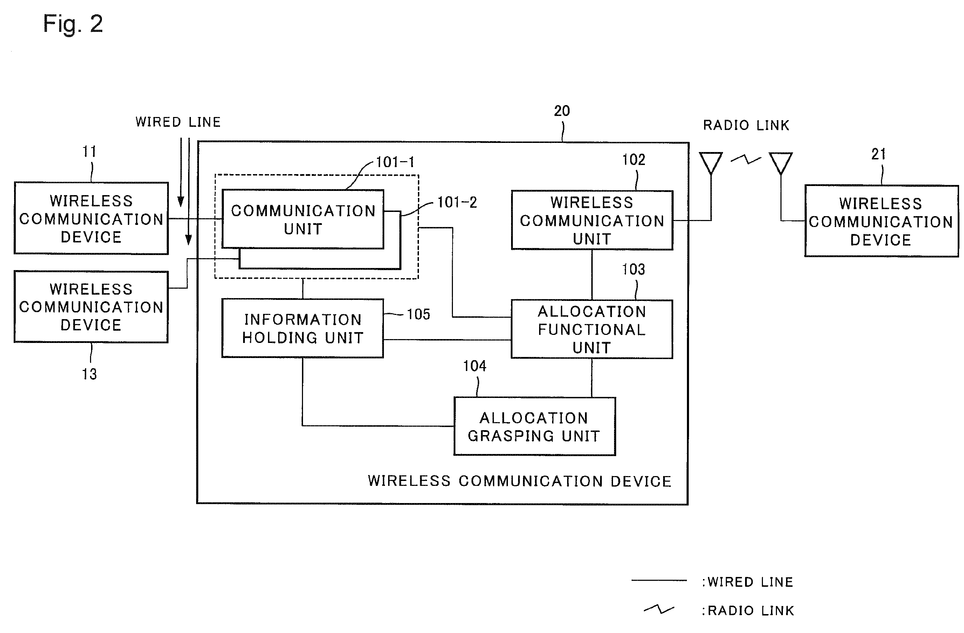

A configuration of the wireless communication devices 10, 20 for implementing the aforementioned function is described. Since the configuration of the wireless communication device 10 is the same as the configuration of the wireless communication device 20, the configuration of the wireless communication device 20 is described as a representative of the wireless communication devices. Fig. 2 is a diagram illustrating a configuration example of the wireless communication device 20 provided in the wireless communication network in the first exemplary embodiment of the present invention.

As illustrated in Fig. 2, the wireless communication device 20 is provided with communication units 101-i (i=1 to the number of devices to be connected via wired lines), a wireless communication unit 102, an allocation functional unit 103, an allocation grasping unit 104, and an information holding unit 105. The wireless communication device 20 is connected to the two wireless communication devices 11 and 13 via wired lines. Therefore, the wireless communication device 20 is provided with a communication unit 101-1 and a communication unit 101-2. (Note that since the wireless communication device 10 is connected to the EMS 30 via a wired line, the wireless communication device 10 is provided with a single communication unit 101-1).

The allocation functional unit 103 is connected to the communication unit 101-1, the communication unit 101-2, the wireless communication unit 102, the allocation grasping unit 104, and the information holding unit 105. The information holding unit 105 is connected to the communication unit 101-1, the communication unit 101-2, and the allocation grasping unit 104.

Note that the communication unit 101-1 is connected to the wireless communication device 11 via a wired line. The communication unit 101-2 is connected to the wireless communication device 13 via a wired line. The wireless communication unit 102 is connected to the wireless communication device 21 via a radio link.

The communication unit 101-1, the communication unit 101-2, and the wireless communication unit 102 can be implemented by using an electronic circuit, a Field-Programmable Gate Array (FPGA), or a Digital Signal Processor (DSP). The allocation functional unit 103, the allocation grasping unit 104, and the information holding unit 105 can be implemented by a software component, and are provided with a Central Processing Unit (CPU) and a memory such as an RAM for executing the software components. RAM is an abbreviation of Random Access Memory.

### (4) Function of Each Unit Constituting Wireless Communication devices 10, 20

The details of the function of each unit constituting the wireless communication devices 10, 20 are described in the following.

Firstly, in response to an input of a packet requesting allocation of an IP address (hereinafter, referred to as an "allocation request packet") from a wired line connected to the communication unit 101-i, the communication unit 101-i outputs the allocation request packet to the allocation functional unit 103. Further, the communication unit 101-i outputs a packet input from the allocation functional unit 103 to the wired line.

The wireless communication unit 102 executes the following function after activation and establishment of point-to-point connection with the wireless communication device adjacent to the wireless communication unit 102.

Firstly, in response to an input of the allocation request packet from the radio link connected to the wireless communication unit 102 (i.e. an adjacent wireless communication device), the wireless communication unit 102 outputs the allocation request packet to the allocation functional unit 103. Further, the wireless communication unit 102 outputs a packet input from the allocation functional unit 103 to the radio link connected to the wireless communication unit 102 (to the adjacent wireless communication device) as a radio signal.

In response to an input of the allocation request packet, the allocation functional unit 103 determines whether the input packet is the allocation request packet from a predetermined wireless communication device under control. The aforementioned determination method will be described later in detail in the section [Description on Operation].

When the allocation functional unit 103 determines that the input packet is the allocation request packet from the predetermined wireless communication device, the allocation functional unit 103 requests allocatable IP addresses from the information holding unit 105. In response to an input of allocatable IP addresses, the allocation functional unit 103 arbitrarily selects one of the allocatable IP addresses, and outputs the selected IP address as a packet to the communication unit 101-i that has input the allocation request packet, or to the wireless communication unit 102. Note that when outputting the packet, the allocation functional unit 103 extracts an MAC address from the input allocation request packet, and outputs the packet whose destination MAC (Media Access Control) address is equal to the extracted MAC address. Further, the allocation functional unit 103 outputs the selected IP address to the allocation grasping unit 104.

On the other hand, when the allocation functional unit 103 determines that the input packet is not the allocation request packet from the predetermined wireless communication device, the allocation functional unit 103 transfers the input allocation request packet to the other wireless communication device. The transfer method will be described later in detail in the section [Description on Operation].

In response to an input of an IP address, the allocation grasping unit 104 outputs a signal requesting not to allocate the IP address (hereinafter, referred to as an "allocation disable signal"). Note that the allocation grasping unit 104 outputs the aforementioned allocation disable signal, in which an input IP address is included.

The information holding unit 105 sets and holds at least one IP address that is usable in the network by an administrator of the wireless communication network in the present exemplary embodiment. In response to a request for an allocatable IP address, the information holding unit 105 outputs allocatable IP addresses held therein. In response to an input of the aforementioned allocation disable signal, the information holding unit 105 extracts an IP address from the signal, deletes the extracted IP address from the allocatable IP addresses held therein, and stores the extracted IP address as an IP address that is already allocated.

### (5) Function of Wireless Communication Devices 11, 12, 13, and 21

The wireless communication devices 11, 12, 13, 21 are provided with the function of performing wireless communication with the wireless communication devices 10, 13, 12, 20 adjacent thereto by point-to-point connection, and are further provided with a typical function of a DHCP client.

Specifically, after activation, the wireless communication devices 11, 12, 13, 21 execute the following function after activation and establishment of point-to-point connection with the wireless communication devices 10, 13, 12, 20 (in the case of the wireless communication devices 10, 20, the wireless communication unit 102 in the wireless communication devices 10, 20) adjacent to the wireless communication unit 11, 12, 13, 21.

Firstly, the wireless communication devices 11, 12, 13, 21 broadcast a packet requesting allocation of an IP address, namely, the allocation request packet within the wireless communication network in the present exemplary embodiment. The allocation request packet may be a well-known broadcast packet. Note that the wireless communication devices 11, 12, 13, 21 broadcast the allocation request packet, in which an MAC address thereof is included. In response to an input of the allocation request packet from one of the wireless communication devices 10 to 13, and 20 to 21, the wireless communication devices 11, 12, 13, 21 output the allocation request packet to the wireless communication devices 10 to 13, and 20 to 21 other than the wireless communication device that transmits the allocation request packet. In response to an input of a packet from the wireless communication devices 10, 20, the wireless communication devices 11, 12, 13, 21 extract an IP address from the packet. The wireless communication devices 11, 12, 13, 21 hold the extracted IP address as an IP address thereof.

### (6) Function of EMS 30

The EMS 30 is a typical EMS, and monitors wireless communication devices. An IP address is set in the EMS 30 by the administrator of the wireless communication network in the present exemplary embodiment. The EMS 30 holds the set IP address as an IP address thereof. In the following, it is assumed that the IP address "172.18.3.1/24" is set in the EMS 30, and the EMS 30 holds the set IP address as an IP address thereof.

### [Description on Operation]

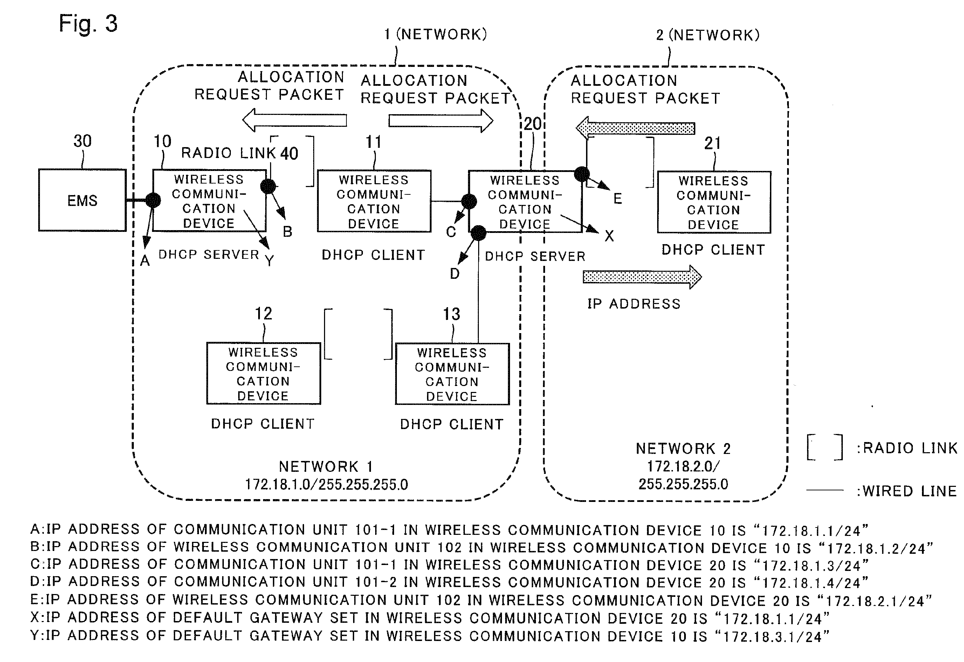

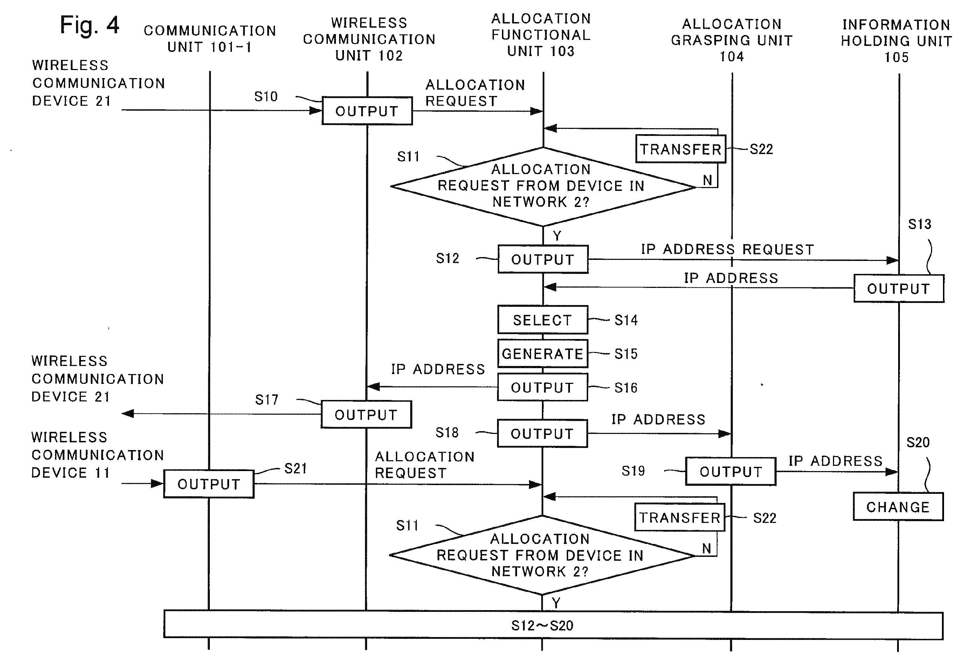

Fig. 3 and Fig. 4 are diagrams for describing an operation of wireless communication devices provided in the wireless communication network in the first exemplary embodiment of the present invention. In the following, the operation of the wireless communication devices in the present exemplary embodiment is described using Fig. 3 and Fig. 4.

### (1) Preparatory Setting for Wireless Communication Devices 10, 20 (DHCP server)

### (1-1) Determination of Wireless Communication Device to which IP Address is Allocated

Firstly, to operate the wireless communication network in the present exemplary embodiment, the administrator of the wireless communication network in the present exemplary embodiment determines wireless communication devices that constitute a network together with the wireless communication devices 10, 20 for each of the wireless communication devices 10 and 20 provided with the function of a DHCP server.

For instance, the administrator of the wireless communication network in the present exemplary embodiment may determine that wireless communication devices that constitute a network together with the wireless communication device 10 are the wireless communication devices 11 to 13, and that wireless communication device that constitutes a network together with the wireless communication device 20 is the wireless communication device 21.

In the following, description is continued based on the premise that the administrator of the wireless communication network in the present exemplary embodiment determines wireless communication devices that constitute a network together with the wireless communication devices 10, 20 as described above. Further, in the following, a network constituted by the wireless communication device 10 and the wireless communication devices 11 to 13 is referred to as a "network 1", and a network constituted by the wireless communication device 20 and the wireless communication device 21 is referred to as a "network 2".

### (1-2) Preparatory Setting

As will be described later in the section "(2) Operation of Wireless Communication Network in Exemplary Embodiment" in detail, the wireless communication devices 10, 20 perform an operation of allocating an IP address to the wireless communication device constituting a network together with the wireless communication devices 10, 20 (the wireless communication device determined in the aforementioned section (1-1)). In order to carry out the aforementioned operation, the administrator of the wireless communication network in the present exemplary embodiment performs settings described in the following sections (1-2-1) to (1-2-3) in advance with respect to the wireless communication devices 10, 20 provided with the function of a DHCP server.

### (1-2-1) Setting of IP Address of Each Port

The administrator of the wireless communication network in the present exemplary embodiment sets IP addresses of the communication unit 101-i and the wireless communication unit 102 (hereinafter, referred to as "ports") provided in the wireless communication devices 10, 20 in the allocation functional unit 103 in the wireless communication devices 10, 20.

Specifically, the administrator of the wireless communication network in the present exemplary embodiment sets an IP address of each port in the wireless communication device 10, in other words, IP addresses of the communication unit 101-1 and the wireless communication unit 102 provided in the wireless communication device 10 in the allocation functional unit 103 in the wireless communication device 10. Further, the administrator sets an IP address of each port in the wireless communication device 20, in other words, IP addresses of the communication unit 101-1, the communication unit 101-2, and the wireless communication unit 102 in the wireless communication device 20 in the allocation functional unit 103 in the wireless communication device 20.

The administrator of the wireless communication network in the present exemplary embodiment may set any IP address, as the IP address of each port. Note that regarding IP addresses of ports (for example, the wireless communication unit 102 in the wireless communication device 10) to be connected to the wireless communication devices 11 to 13 constituting the network 1, the administrator of the wireless communication network in the present exemplary embodiment sets an IP address including a network part (for example, "172.18.1") representing the network 1 for each port. Likewise, regarding a port (the wireless communication unit 102 in the wireless communication device 20) to be connected to the wireless communication device 21 constituting the network 2, the administrator sets an IP address including a network part (for example, "172.18.2") representing the network 2. The network parts representing the networks 1 and 2 are determined so as to be different from each other by the administrator of the wireless communication network in the present exemplary embodiment.

Fig. 3 illustrates a specific example of setting the IP address of each port. The administrator of the wireless communication network in the present exemplary embodiment may set the IP address of each port as described in association with the characters "A" to "E" in Fig. 3.

### (1-2-2) Setting of Allocatable IP addresses

Next, the administrator of the wireless communication network in the present exemplary embodiment sets IP addresses allocatable to the wireless communication devices in the information holding unit 105 in the wireless communication devices 10, 20.

Specifically, the administrator of the wireless communication network in the present exemplary embodiment sets IP addresses including the network part representing the network 1, as IP addresses allocatable to the wireless communication devices 11 to 13, in the information holding unit 105 in the wireless communication device 10. Likewise, the administrator of the wireless communication network in the present exemplary embodiment sets IP addresses including the network part representing the network 2, as IP addresses allocatable to the wireless communication device 21, in the information holding unit 105 in the wireless communication device 20.

The information holding unit 105 in the wireless communication devices 10, 20 holds the set allocatable IP addresses therein.

### (Setting Example of Allocatable IP Addresses)

For instance, the administrator of the wireless communication network in the present exemplary embodiment may set forty IP addresses i.e. "172.18.1.10/24", "172.18.1.11/24", ... , and "172.18.1.49/24" in the information holding unit 105 in the wireless communication device 10. Every one of the IP addresses is an IP address having the network part ("172.18.1") representing the network 1.

Likewise, the administrator of the wireless communication network in the present exemplary embodiment may set forty IP addresses i.e. "172.18.2.10/24", "172.18.2.11/24", ... , and "172.18.2.49/24" in the information holding unit 105 in the wireless communication device 20. Every one of the IP addresses is an IP address having the network part ("172.18.2") representing the network 2.

### (1-2-3) Setting of Default Gateway

Next, the administrator of the wireless communication network in the present exemplary embodiment sets the IP address of the default gateway in the allocation functional unit 103 in the wireless communication devices 10, 20.

Specifically, the administrator of the wireless communication network in the present exemplary embodiment sets an IP address of a device on the outside of the network 1 connected to the wireless communication device 10, for instance, an IP address of the EMS 30, as the IP address of the default gateway, in the allocation functional unit 103 in the wireless communication device 10. The administrator of the wireless communication network in the present exemplary embodiment sets an IP address of a device on the outside of the network 2 connected to the wireless communication device 20, for instance, an IP address of a port in the wireless communication device 10, as the IP address of the default gateway, in the allocation functional unit 103 in the wireless communication device 20.

### (Setting Example of Default Gateway)

For instance, the administrator of the wireless communication network in the present exemplary embodiment may set an IP address "172.18.1.1/24" of the communication unit 101-1 in the wireless communication device 10, as the IP address of the default gateway, in the allocation functional unit 103 in the wireless communication device 20. In Fig. 3, the set IP address "172.18.1.1/24" is described in association with the character "X".

Further, the administrator of the wireless communication network in the present exemplary embodiment may set an IP address of the EMS 30, for instance, "172.18.3.1/24", as the IP address of the default gateway, in the allocation functional unit 103 in the wireless communication device 10. In Fig. 3, the set IP address "172.18.3.1/24" is described in association with the character "Y".

In the following, description is continued based on the premise that the administrator of the wireless communication network in the present exemplary embodiment sets the IP address of the default gateway as described above.

### (2) Operation of Wireless Communication Network in the Present Exemplary Embodiment

In the following, an operation of the wireless communication network in the present exemplary embodiment is described.

In the following, description is made based on the premise that after activation, each of the wireless communication devices 10 to 13, and 20 to 21 (in the case of the wireless communication devices 10, 20, the wireless communication unit 102) establishes point-to-point connection to the wireless communication devices 11, 10, 13, 12, 21, 20 adjacent thereto.

### (2-1) Operation 1 of Wireless Communication Devices 11 to 13, and 21 (DHCP Client)

Firstly, after establishing point-to-point connection, the wireless communication devices 11 to 13, and 21 broadcast a packet requesting allocation of an IP address (hereinafter, referred to as an "allocation request packet") within the wireless communication network in the present exemplary embodiment. This is because the wireless communication devices 11 to 13, and 21 do not know the IP address of the wireless communication devices 10, 20 having the function of a DHCP server. The arrows in Fig. 3 indicate how the wireless communication devices 11, 21 broadcast the allocation request packet.

The aforementioned allocation request packet may be a well-known broadcast packet, for instance, a DHCP Discover message. Note that the wireless communication devices 11 to 13, and 21 broadcast the allocation request packet, in which an MAC (Media Access Control) address thereof is included.

### (Regarding Broadcasted Allocation Request Packet)

The allocation request packet broadcasted from the wireless communication devices 11 to 13, and 21 is input to the wireless communication devices 10, 20.

### (2-2) Operation of Wireless Communication Devices 10, 20 (DHCP Server)

### (Summary of Operation)

In response to an input of a broadcasted allocation request packet, the wireless communication devices 10, 20 determine whether the allocation request packet is the allocation request packet from the predetermined wireless communication device assigned to the wireless communication devices 10, 20.

Specifically, in response to an input of the allocation request packet, the wireless communication device 10 determines whether the allocation request packet is the allocation request packet from the wireless communication devices 11, 12, 13 constituting the network 1 together with the wireless communication device 10. Likewise, in response to an input of the allocation request packet, the wireless communication device 20 determines whether the allocation request packet is the allocation request packet from the wireless communication device 21 constituting the network 2 together with the wireless communication device 20. The details on the determination will be described later in the section (Details on Operation).

When the input allocation request packet is the allocation request packet from the wireless communication device constituting a network together with the wireless communication devices 10, 20, the wireless communication devices 10, 20 allocate an IP address to the wireless communication device that inputs the allocation request packet.

### (Details on Operation)

In order to implement the aforementioned operation, the wireless communication devices 10, 20 perform the processes indicated by the following S10 to S21. The following S10 to S21 are described regarding the wireless communication device 20. The same applied to the wireless communication device 10. Note that regarding the wireless communication device 10, S10 to S21 are performed by replacing the term "the wireless communication device 20" by the term "the wireless communication device 10", replacing the term "the network 2" by the term "the network 1", and replacing the term "the wireless communication device 21" by the term "the wireless communication devices 11 to 13".

Further, in the following S10 to S21, description is made based on the premise that the allocation request packet is input from the wireless communication devices 11, 21. The wireless communication devices 10, 20 also perform the same process as described above when the allocation request packet is input from the wireless communication devices 12, 13.

### (2-2-1) Determination as to Whether Packet is Allocation Request Packet from Wireless Communication Device Constituting Network together with Device (Part 1)

### (S10)

Firstly, as illustrated in Fig. 4, in response to an input of the allocation request packet from the wireless communication device 21, the wireless communication unit 102 in the wireless communication device 20 outputs the allocation request packet to the allocation functional unit 103.

### (S11)

Next, in response to an input of the allocation request packet, the allocation functional unit 103 in the wireless communication device 20 determines whether the input allocation request packet is the allocation request packet from the wireless communication device 21 constituting the network 2.

Specifically, the allocation functional unit 103 in the wireless communication device 20 performs determination according to the following (I) to (III).

### (Specific Operation of S11)

### (I)

In response to an input of the allocation request packet from the wireless communication unit 102, the allocation functional unit 103 in the wireless communication device 20 determines whether the network part of the IP address of the wireless communication unit 102 is the same as the network part of the IP address of a default gateway.

### (Reason Why it is possible to Determine whether Allocation Request Packet is Allocation Request Packet from Wireless Communication Device 21 Constituting Network 2 by Determination (I))

The network part of the IP address of the default gateway represents a network other than the network 2. Therefore, in the determination (I), it is determined whether the wireless communication unit 102 that inputs the allocation request packet belongs to a network other than the network 2.

When the network part of the IP address of the wireless communication unit 102 is the same as the network part of the IP address of the default gateway (which indicates a network other than the network 2), the wireless communication unit 102 belongs to a network other than the network 2. When the wireless communication unit 102 belongs to a network other than the network 2, the allocation request packet input from the wireless communication unit 102 is a packet input from a network other than the network 2. In other words, when the network part of the IP address of the wireless communication unit 102 is the same as the network part of the IP address of the default gateway, it is possible to determine that the input allocation request packet is not the allocation request packet from the wireless communication device 21 constituting the network 2.

Conversely, when the network part of the IP address of the wireless communication unit 102 is different from the network part of the IP address of the default gateway (which indicates a network other than the network 2), the wireless communication unit 102 does not belong to a network other than the network 2. When the wireless communication unit 102 does not belong to a network other than the network 2 (in other words, when the wireless communication unit 102 belongs to the network 2), the allocation request packet input from the wireless communication unit 102 is input from the network 2. In other words, when the network part of the IP address of the wireless communication unit 102 is different from the network part of the IP address of the default gateway, it is possible to determine that the input allocation request packet is the allocation request packet from the wireless communication device 21 constituting the network 2.

By performing the aforementioned determination (I), the allocation functional unit 103 in the wireless communication unit 20 can determine whether the input allocation request packet is the allocation request packet from the wireless communication device 21 constituting the network 2.

### (II)

In the aforementioned determination (I), when it is determined that the network parts are the same as each other, the allocation functional unit 103 in the wireless communication device 20 determines that the input allocation request packet is not the allocation request packet from the wireless communication device 21 constituting the network 2.

### (III)

On the other hand, when it is determined that the network parts are different from each other, the allocation functional unit 103 in the wireless communication device 20 determines that the input allocation request packet is the allocation request packet from the wireless communication device 21 constituting the network 2.

### (Specific Example)

In the aforementioned section "(1) Preparatory Setting for Wireless Communication Devices 10, 20 (DHCP server)", the administrator of the wireless communication network in the present exemplary embodiment sets the IP address of the wireless communication unit 102 to be "172.18.2.1/24" in the wireless communication device 20 (see E in Fig. 3). Further, the administrator of the wireless communication network in the present exemplary embodiment sets the IP address of the default gateway to be "172.18.1.1/24" in the wireless communication device 20 (see X in Fig. 3).

The network parts of the aforementioned IP addresses are different from each other. Therefore, by performing the aforementioned process (III), the allocation functional unit 103 in the wireless communication device 20 determines that the input allocation request packet is the allocation request packet from the wireless communication device 21 constituting the network 2.

Note that when the aforementioned process (II) is performed, and when it is determined that the input allocation request packet is not the allocation request packet from the wireless communication device 21 constituting the network 2, the allocation functional unit 103 transfers the input allocation request packet to another wireless communication device. The specific content of the transfer operation will be described later in detail in S22. In the following, description is continued based on the premise that the allocation functional unit 103 in the wireless communication device 20 determines that the input allocation request packet is the allocation request packet from the wireless communication device 21 constituting the network 2.

Note that in response to an input of the allocation request packet from the wireless communication unit 102, the allocation functional unit 103 may immediately determine that the input allocation request packet is the allocation request packet from the wireless communication device 21 constituting the network 2, in place of performing the aforementioned processes (I) to (III).

### (2-2-2) Allocation of IP Address

### (S12)

Next, as illustrated in Fig. 4, when the allocation functional unit 103 determines that the input allocation request packet is the allocation request packet from the wireless communication device 21 constituting the network 2 (in the case of Yes in S11), the allocation functional unit 103 requests allocatable IP addresses from the information holding unit 105. This is for the purpose of allocating an IP address to the wireless communication device 21.

### (S13)

Then, in response to a request for an allocatable IP address, the information holding unit 105 in the wireless communication device 20 outputs all the allocatable IP addresses held therein to the allocation functional unit 103.

Specifically, the information holding unit 105 in the wireless communication device 20 outputs, to the allocation functional unit 103, the IP addresses "172.18.2.10/24" to "172.18.2.49/24" that are set in advance and held as allocatable IP addresses.

### (S14)

Then, in response to an input of allocatable IP addresses, the allocation functional unit 103 in the wireless communication device 20 arbitrarily selects one of the allocatable IP addresses.

### (S15)

Then, the allocation functional unit 103 in the wireless communication device 20 includes the selected IP address in a typical packet. In this case, the allocation functional unit 103 in the wireless communication device 20 extracts an MAC address from the input allocation request packet, and sets a destination MAC address of the packet, as the extracted MAC address.

The aforementioned extracted MAC address is an MAC address of the wireless communication device 21. Therefore, the aforementioned packet is a packet for the wireless communication device 21. The aforementioned packet may be a well-known DHCP OFFER packet.

### (S16)

Then, the allocation functional unit 103 in the wireless communication device 20 outputs a packet generated in S15 to the wireless communication unit 102 that inputs the allocation request packet, or to the communication unit 101-i. In this exemplary embodiment, as described in S10, the wireless communication unit 102 inputs the allocation request packet. Therefore, the allocation functional unit 103 in the wireless communication device 20 outputs a packet generated in S15 to the wireless communication unit 102.

### (S17)

Then, the wireless communication unit 102 in the wireless communication device 20 outputs an input packet (IP address) to the wireless communication device 21 as a radio signal.

### (Operation of Wireless Communication Device 21 after S17)

After S17, the packet is input to the wireless communication device 21 from the wireless communication device 20.

The destination MAC address of the input packet is the MAC address of the wireless communication device 21. Therefore, the wireless communication device 21 acquires an IP address from the extracted packet. The wireless communication device 21 holds the acquired IP address as its own IP address.

By performing the aforementioned processes of S12 to S17, the wireless communication device 20 allocates an IP address to the wireless communication device 21.

### (2-2-2) Management of Allocated IP Address

After S16, the wireless communication device 20 performs the processes described in the following S18 to S20 so as not to allocate the IP address that is already allocated to the wireless communication device 21 to another device.

### (S18)

After S16, the allocation functional unit 103 in the wireless communication device 20 outputs an IP address selected in S14 to the allocation grasping unit 104.

### (S19)

Then, in response to an input of an IP address from the allocation functional unit 103, the allocation grasping unit 104 in the wireless communication device 20 outputs, to the information holding unit 105, a signal requesting not to allocate an IP address (hereinafter, referred to as an "allocation disable signal"). Note that the allocation grasping unit 104 in the wireless communication device 20 outputs the aforementioned allocation disable signal, in which an input IP address is included.

### (S20)

Then, in response to an input of an allocation disable signal, the information holding unit 105 in the wireless communication device 20 extracts an IP address from the signal, and deletes the extracted IP address from the allocatable IP addresses held therein. Further, the information holding unit 105 in the wireless communication device 20 stores the extracted IP address, as an IP address that is already allocated.

### (2-2-3) Determination as to Whether Packet is Allocation Request Packet from Wireless Communication Device Constituting Network together with Device (Part 2)

### (S21)

Then, as illustrated in Fig. 4, when the allocation request packet is input from the wireless communication device (for example, from the wireless communication device 11), the communication unit 101-i (for example, the communication unit 101-1) in the wireless communication device 20 outputs the allocation request packet to the allocation functional unit 103.

### (S11)

Then, in response to an input of the allocation request packet, as well as S11, the allocation functional unit 103 in the wireless communication device 20 determines whether the input allocation request packet is the allocation request packet from the wireless communication device 21 constituting the network 2.

### (Specific Operation of S11)

Specifically, the allocation functional unit 103 in the wireless communication device 20 executes the aforementioned processes (I) to (III). Note that the allocation functional unit 103 in the wireless communication device 20 executes the aforementioned processes (I) to (III) by replacing the term "the wireless communication unit 102" by the term "the communication unit 101-i".

In this exemplary embodiment, in the aforementioned section "(1-2) Preparatory Setting", as illustrated in Fig. 3, the administrator of the wireless communication network in the present exemplary embodiment sets an IP address whose network part is "172.18.1" in the allocation functional unit 103, as an IP address of the communication unit 101-1. Further, the administrator of the wireless communication network in the present exemplary embodiment sets an IP address whose network part is "172.18.1" in the allocation functional unit 103, as the IP address of the default gateway. Regarding the aforementioned two IP addresses, the network parts are the same as each other. Since the network parts are the same as each other, as a result of executing the aforementioned processes (I) to (III), the allocation functional unit 103 in the wireless communication device 20 determines that the input allocation request packet is not the allocation request packet from the wireless communication device 21 constituting the network 2.

### (S22)

When it is determined that the input allocation request packet is not the allocation request packet from the wireless communication device 21 constituting the network 2 (in the case of No in S11), the allocation functional unit 103 in the wireless communication device 20 transfers the input allocation request packet to the other wireless communication device 13.

### [Specific Operation of S22]

Specifically, the allocation functional unit 103 in the wireless communication device 20 outputs the input allocation request packet to the other communication unit. In this exemplary embodiment, the other communication unit is a communication unit other than the communication unit to which the allocation request packet is input (in this exemplary embodiment, the communication unit 101-1), and is a communication unit of an IP address having a same network part as the network part of the IP address of the communication unit to which the allocation request packet is input. In this exemplary embodiment, the communication unit 101-2 corresponds to the aforementioned other communication unit. The communication unit 101-2 outputs the input allocation request packet to the wireless communication device 13 via a wired line connected to the communication unit 101-2.

### (Operation of Wireless Communication Devices 12 and 13 after S22)

The aforementioned allocation request packet output from the wireless communication device 20 reaches the wireless communication device 13. The wireless communication device 13 without the function of a DHCP server transfers the input allocation request packet to the wireless communication device 12 adjacent to the wireless communication device 13. The wireless communication device 12 discards the input allocation request packet, because there is no wireless communication device to which the packet is to be transferred.

### (2-2-4) Allocation Request Packet from Wireless Communication Devices 12 and 13

Note that, other than the wireless communication devices 11 and 21, the allocation request packets broadcasted from the wireless communication devices 12, 13 are also input to the wireless communication device 20 having the function of a DHCP server. Also in this case, the wireless communication device 20 performs the operations of S10 to S22 in response to an input of the allocation request packet.

As a result, the wireless communication device 20 determines that the allocation request packets from the wireless communication devices 12, 13 are not the allocation request packet from the wireless communication device 21 constituting a network together with the wireless communication device 20, and transfers the allocation request packet to the other wireless communication device 11.

The wireless communication device 11 transfers the allocation request packets from the wireless communication devices 12, 13 to the wireless communication device 10 adjacent to the wireless communication device 11. Similarly to the above, when the allocation request packets are input from the wireless communication devices 12, 13, the wireless communication device 10 executes S10 to S22, determines that the input allocation request packet is the allocation request packet from the wireless communication device constituting the network 1 together with the wireless communication device 10, and allocates an IP address to the wireless communication devices 12, 13.

### (3) Summary of Operation Result of Wireless Communication Devices 10, 20

As described above, as a result of an input of the allocation request packet from each of the wireless communication devices, and execution of S10 to S22, the wireless communication device 20 allocates an IP address to the wireless communication device 21 constituting the network 2 together with the wireless communication device 20. Further, as a result of an input of the allocation request packet from each of the wireless communication devices, and execution of S10 to S22, the wireless communication device 10 allocates an IP address to the wireless communication devices 11 to 13 constituting the network 1 together with the wireless communication device 10.

In this case, in the wireless communication network in the present exemplary embodiment, even when the radio link 40 is deteriorated, as far as the radio link 41 is not deteriorated, it is possible to allocate an IP address from the wireless communication device 20 provided with the function of a DHCP server to the wireless communication device 21.

On the other hand, in a typical P2P communication network, when once the radio link 520 (corresponding to the radio link 40) is deteriorated, it is impossible to allocate an IP address from the DHCP server to the wireless communication device 513 (a device corresponding to the wireless communication device 21 in the present exemplary embodiment).

In the wireless communication network in the present exemplary embodiment, it is possible to suppress a case that an IP address is not allocated to the wireless communication device.

### (4) Other Configuration Examples

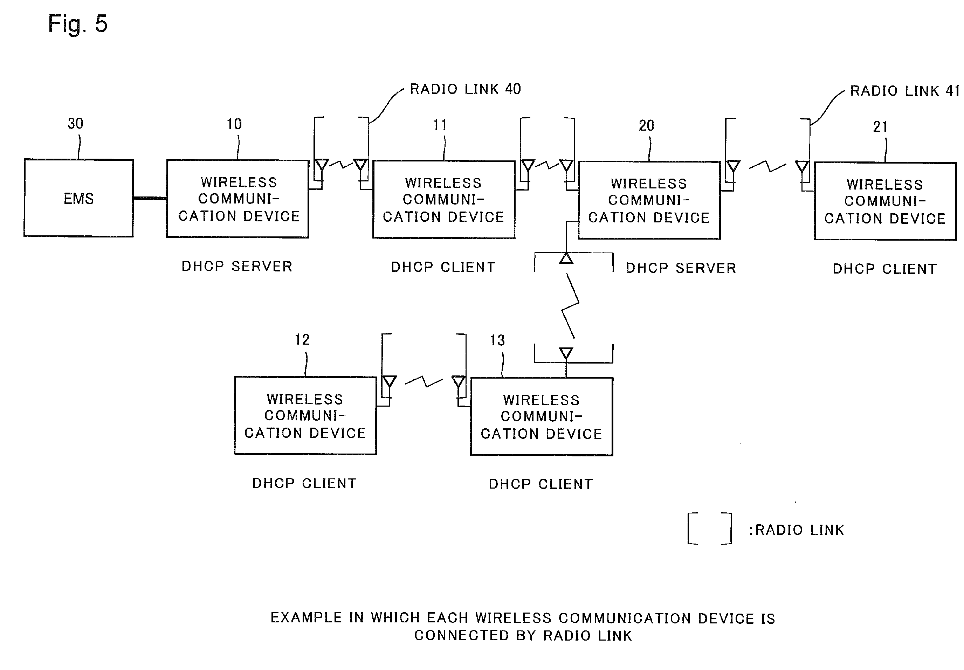

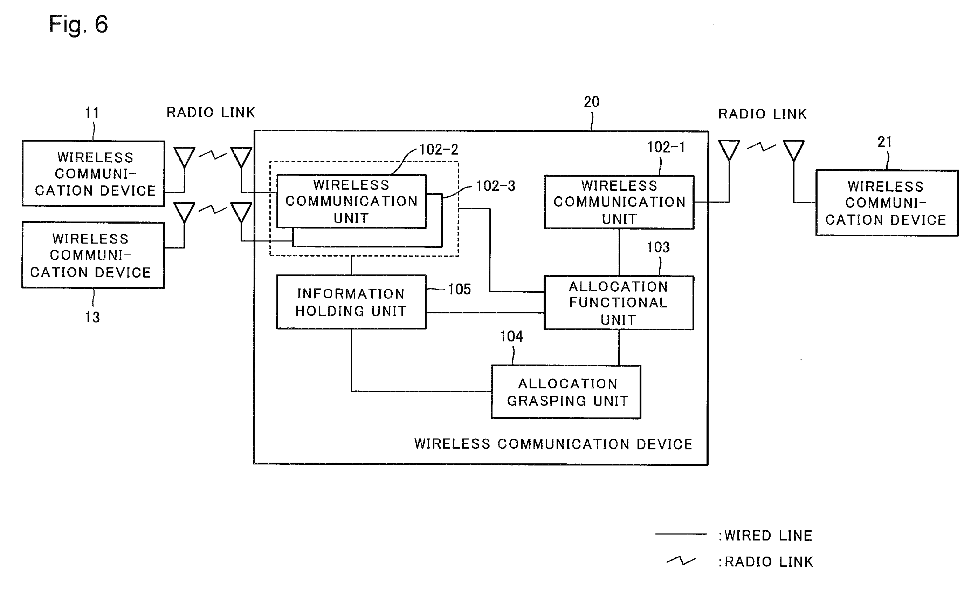

Fig. 5 is a diagram illustrating another configuration example of the wireless communication network in the first exemplary embodiment of the present invention (a case in which each of the wireless communication devices is connected by a radio link). Fig. 6 is a diagram illustrating another configuration example of the wireless communication device 20 provided in a wireless communication system in the first exemplary embodiment of the present invention.

In the wireless communication network in the present exemplary embodiment, as illustrated in Fig. 5, each of the wireless communication devices constituting a network may be connected only by a radio link.

In this case, the wireless communication devices 10, 20 are provided with wireless communication units 102-i (i=1 to the number of devices to be connected via radio links) by the number equal to the number of devices to be connected via radio links. For instance, the wireless communication device 20 is provided with three devices (i.e. the wireless communication devices 10, 13, and 21) to be connected via radio links. Therefore, as illustrated in Fig. 6, the wireless communication device 20 is provided with wireless communication units 102-1, 102-2, and 102-3.

The function of the wireless communication unit 102-i is the same as the function of the aforementioned wireless communication unit 102. Further, the function of the allocation functional unit 103 is the same as the function described in "(4) Function of Each Unit Constituting Wireless Communication Devices 10, 20" in the aforementioned section [Description on Configuration]. Note that the term "the wireless communication unit 102" is replaced by the term "the wireless communication unit 102-i".

The wireless communication network in the present exemplary embodiment, in which each of the wireless communication devices is connected only by a radio link also executes S10 to S22. However, when S10 to S21 are executed, the term "the wireless communication unit 102" is replaced by the term "the wireless communication unit 102-1".

Further, the administrator of the wireless communication network in the present exemplary embodiment sets in advance the IP address of the wireless communication unit 102-i provided in the wireless communication device in the allocation functional unit 103 in the wireless communication devices 10, 20. For instance, in the case of the wireless communication device 20, the administrator of the wireless communication network in the present exemplary embodiment may set "172.18.1.1/24" as the IP address of the wireless communication unit 102-1. Further, the administrator of the wireless communication network in the present exemplary embodiment may set "172.18.1.2/24" as the IP address of the wireless communication unit 102-2, and may set "172.18.1.3/24" as the IP address of the wireless communication unit 102-2.

Note that the wireless communication unit 102-i and the communication unit 101-i may be provided with a transmission means and a receiving means. The transmission means is a functional unit which executes S17, and the receiving means is a functional unit which executes S10 or S21 or both.

Further, the allocation functional unit 103 may be provided in the wireless communication units 102-i or in the communication units 101-i. In this case, the allocation functional unit 103 is integrally provided with the transmission means or the receiving means described above.

### [Description on Advantageous Effects]

According to the present exemplary embodiment, a wireless communication network is advantageous in sufficiently reducing the cost required to form a new network. This is because in the wireless communication network in the present exemplary embodiment, it is not necessary to additionally provide a DHCP server, because the wireless communication device itself is provided with the function of a DHCP server.

Further, according to the wireless communication network in the present exemplary embodiment, it is possible to avoid a case that an IP address is not allocated to the wireless communication device.

The reason for this is that the wireless communication network in the present exemplary embodiment is provided with two or more wireless communication devices having a DHCP function (hereinafter, referred to as "DHCP devices"), and each of the DHCP devices are installed with the radio link(s) between them.

As a result, it is possible to reduce the number of radio links between the DHCP wireless communication device and wireless communication devices, as compared with the network disclosed in PTL 1. This is advantageous to securely allocate an IP address to each of the wireless communication devices by the DHCP wireless communication device. Thus, according to the wireless communication network in the present exemplary embodiment, it is possible to avoid a case that an IP address is not allocated to the wireless communication device.

Further, according to the wireless communication network in the present exemplary embodiment, it is possible to reduce the number of wireless communication devices to which an IP address is not allocated, as compared with the network disclosed in PTL 1. Therefore, it is possible to reduce the number of times by which a network administrator is required to go to a place where the wireless communication device is installed, and to manually allocate an IP address to the wireless communication device.

### [Second Embodiment]

Next, the second exemplary embodiment of the present invention is described.

In the wireless communication network in the first exemplary embodiment, the administrator of the wireless communication network in the present exemplary embodiment sets various IP addresses in advance in the wireless communication devices 10, 20 provided with a DHCP function. In the wireless communication network in the second exemplary embodiment, an EMS sets various IP addresses in the wireless communication devices 10, 20 provided with a DHCP function. Further, in the wireless communication network in the second exemplary embodiment, when all the allocatable IP addresses are allocated, the wireless communication devices 10, 20 provided with a DHCP function notify the EMS that all the allocatable IP addresses are allocated together with an IP address thereof. The EMS displays the IP address of the wireless communication devices 10, 20 provided with a DHCP function, in which all the allocatable IP addresses are allocated.

### [Description on Configuration]

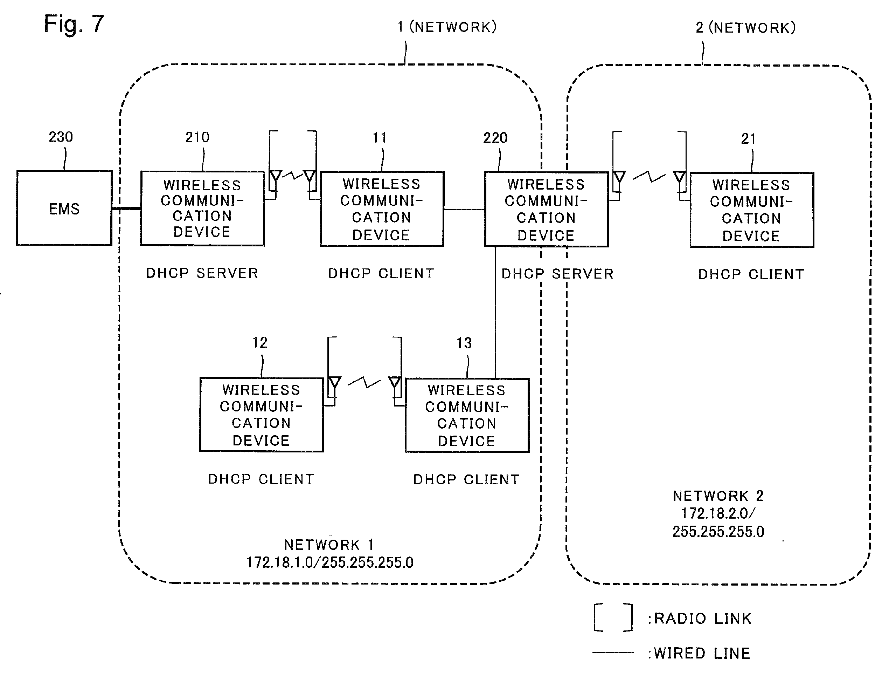

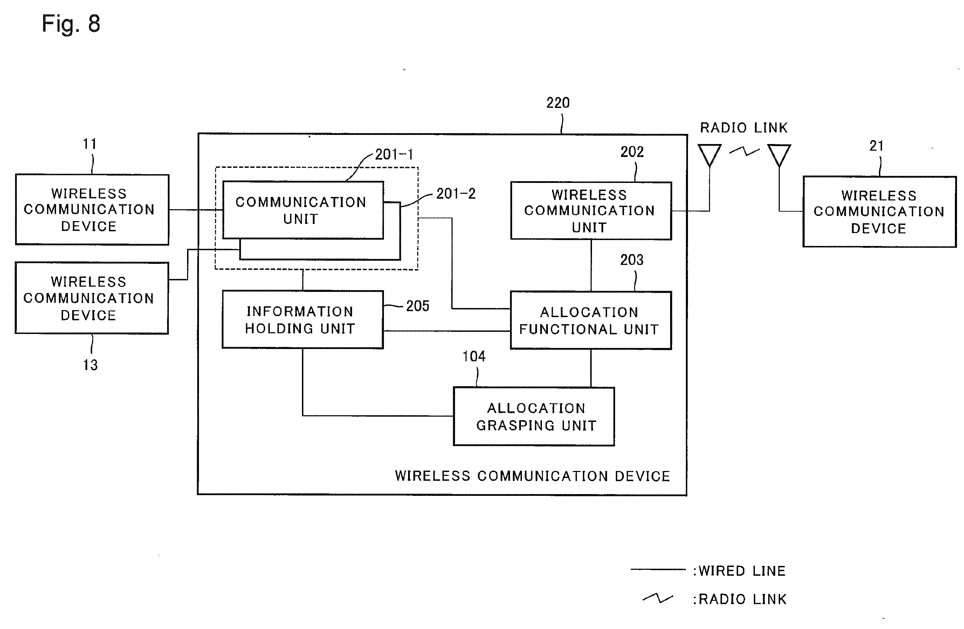

Fig. 7 is a diagram illustrating a configuration example of the wireless communication network in the second exemplary embodiment of the present invention. Fig. 8 is a diagram illustrating a configuration example of wireless communication devices provided in the wireless communication network in the first exemplary embodiment of the present invention.

### (1) Configuration of Wireless Communication Network in the Second Embodiment of the Present Invention

As illustrated in Fig. 7, the wireless communication network in the second exemplary embodiment is provided with an EMS 230 and wireless communication devices 210 and 220, in place of the EMS 30 and the wireless communication devices 10 and 20. Further, as illustrated in Fig. 8, the wireless communication devices 210, 220 are provided with communication units 201-i (i=1 to the number of devices to be connected via wired lines), in place of the communication units 101-i (i=1 to the number of devices to be connected via wired lines). Further, the wireless communication devices 210, 220 are provided with a wireless communication unit 202, an allocation functional unit 203, and an information holding unit 205, in place of the wireless communication unit 102, the allocation functional unit 103, and the information holding unit 105.

### (2) Function of EMS 230

The EMS 230 sets various IP addresses in advance by the administrator of the wireless communication network in the present exemplary embodiment. Various IP addresses are an IP address of each port in the wireless communication devices 210, 220, IP addresses allocatable to wireless communication devices 11 to 13, and 21 by the wireless communication devices 210, 220, and the IP address of the default gateway to be used by the wireless communication devices 210, 220.

When a predetermined operation is performed by the administrator of the wireless communication network in the present exemplary embodiment, the EMS 230 outputs the aforementioned various IP addresses to the wireless communication devices 210, 220.

Specifically, when a predetermined operation is performed, the EMS 230 outputs, to the wireless communication device 210, the IP address of each port in the wireless communication device 210, allocatable IP addresses, and the IP address of the default gateway to be used by the wireless communication device 210, as a packet. Likewise, when a predetermined operation is performed, the EMS 230 outputs, to the wireless communication device 220, the IP address of each port in the wireless communication device 220, allocatable IP addresses, and the IP address of the default gateway to be used by the wireless communication device 220, as a packet.

Further, in response to an input of a packet indicating that an IP address is already allocated, the EMS 230 extracts an IP address from the packet, and displays the IP address on a screen provided in the EMS 230.

### (3) Function of Wireless Communication devices 210, 220

In response to an input of a packet from the EMS 230, the wireless communication devices 210, 220 acquire and hold various IP addresses from the input packet. Further, when all the allocatable IP addresses are allocated, the wireless communication devices 210, 220 output a packet indicating that an IP address is already allocated to the EMS 230. In this case, the wireless communication devices 210, 220 output the packet indicating that an IP address is already allocated, in which the IP addresses of the wireless communication devices 210, 220 are included.

In order to implement the aforementioned function, each unit in the wireless communication devices 210, 220 is provided with the following function.

### (4) Function of Each Unit in Wireless Communication Devices 210, 220

In response to an input of a packet from the EMS 230, the communication unit 201-i in the wireless communication devices 210, 220 output the packet to the allocation functional unit 203. In response to an input of a packet indicating that an IP address is already allocated from the allocation functional unit 203, the communication unit 201-i outputs the packet to the EMS 230.

The allocation functional units 203 in the wireless communication devices 210, 220 extract and store various IP addresses from the input packet. Further, the allocation functional unit 203 acquires allocatable IP addresses from the extracted various IP addresses, and outputs the acquired allocatable IP addresses to the information holding unit 205. When a signal indicating that an IP address is already allocated is input from the information holding unit 205, the allocation functional unit 203 outputs a packet indicating that an IP address is already allocated to the communication unit 201-1. Note that the allocation functional unit 203 outputs the packet indicating that an IP address is already allocated, in which an IP address of a port (for example, the communication unit 201-1) is included.

In response to an input of allocatable IP addresses from the allocation functional unit 203, the information holding unit 205 in the wireless communication devices 210, 220 holds the allocatable IP addresses therein. Further, when an allocatable IP address is requested from the allocation functional unit 203, and when the information holding unit 205 does not hold any of the allocatable IP addresses, the information holding unit 205 outputs a signal indicating that an IP address is already allocated to the allocation functional unit 203. In response to an input of allocatable IP addresses from the allocation functional unit 203, the information holding unit 205 reads the stored IP address that is already allocated. The information holding unit 205 extracts an IP address other than the (read) IP address that is already allocated, out of the input allocatable IP addresses, and stores the extracted IP address, as a newly allocatable IP address.

Note that the configuration and function other than the above are the same as those of the wireless communication device to which a wireless communication terminal in the first exemplary embodiment is applied. Therefore, the same elements as those in the first exemplary embodiment are indicated by the same reference signs, and description thereof is omitted herein.

### [Description on Operation]

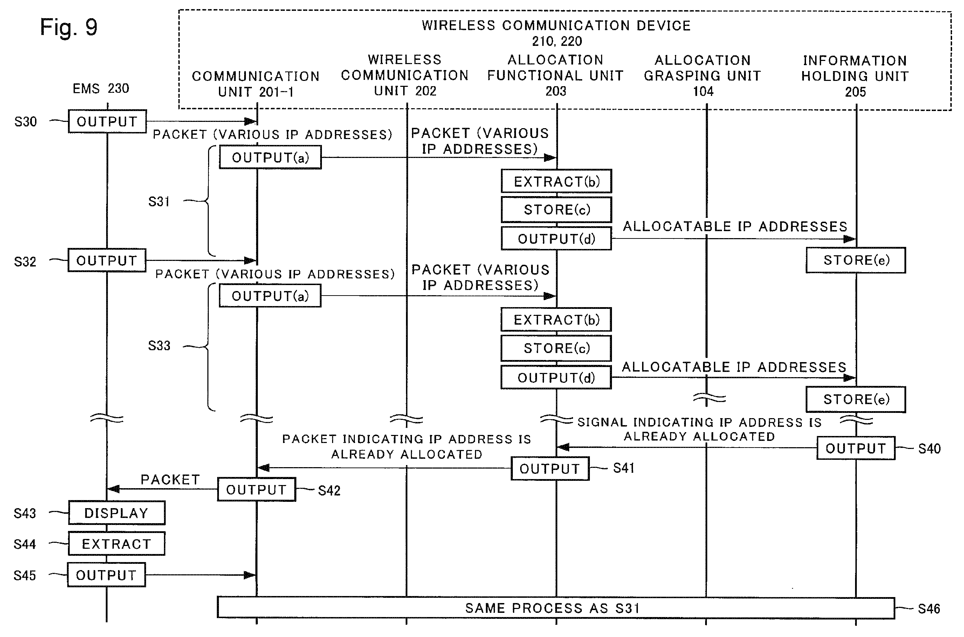

Fig. 9 is a diagram for describing an operation of wireless communication devices provided in the wireless communication network in the second exemplary embodiment of the present invention. The operation of the wireless communication devices in the present exemplary embodiment is described using Fig. 9.

### (1) Setting for Wireless Communication Device 210

### (S30)

Firstly, as illustrated in Fig. 9, when a predetermined operation is performed by the administrator of the wireless communication network in the present exemplary embodiment, the EMS 230 outputs various IP addresses set therein to the communication unit 201-1 in the wireless communication device 210, as a packet.

Various IP addresses in this exemplary embodiment are the IP address of each port in the wireless communication device 210, IP addresses allocatable to the wireless communication devices 11 to 13 by the wireless communication device 210, and the IP address of the default gateway to be used by the wireless communication device 210. In order to distinguish these IP addresses from various IP addresses to be described later in S32, hereinafter, various IP addresses in S30 are referred to as "various IP addresses 1".

### (S31)

Then, in response to an input of a packet from the EMS 230, the wireless communication device 210 extracts various IP addresses 1 from the input packet, and sets the extracted various IP addresses 1 therein.

Specifically, the wireless communication device 210 performs the following operations (a) to (e).
(a) In response to an input of a packet from the EMS 230, the wireless communication unit 201-1 in the wireless communication device 210 outputs the packet to the allocation functional unit 203.
(b) Then, the allocation functional unit 203 in the wireless communication device 210 extracts various IP addresses 1 from the input packet.
(c) Then, the allocation functional unit 203 in the wireless communication device 210 stores the IP address of each port in the wireless communication device 210, and the IP address of the default gateway to be used by the wireless communication device 210, which are included in the extracted various IP addresses 1.
(d) Further, the allocation functional unit 203 in the wireless communication device 210 acquires allocatable IP addresses from the extracted various IP addresses, and outputs the acquired allocatable IP addresses to the information holding unit 205.
(e) Then, in response to input of allocatable IP addresses from the allocation functional unit 203, the information holding unit 205 stores and holds the input allocatable IP addresses.

### (2) Setting for Wireless Communication Device 220

### (S32)

After S30, when a predetermined operation is performed by the administrator of the wireless communication network in the present exemplary embodiment, the EMS 230 outputs various IP addresses set therein to the wireless communication device 220 as a packet.

Various IP addresses in S32 are the IP address of each port in the wireless communication device 220, IP addresses allocatable to the wireless communication device 21 by the wireless communication device 220, and the IP address of the default gateway to be used by the wireless communication device 220. Various IP addresses in S32 are different from various IP addresses 1 in S30. Hereinafter, in order to distinguish various IP addresses in S32 from various IP addresses 1, the various IP addresses in S32 are referred to as "various IP addresses 2".

### (S33)

Next, in response to an input of a packet including various IP addresses 2 from the EMS 230, the wireless communication device 220 extracts the aforementioned various IP addresses 2 from the input packet, and sets the extracted various IP addresses 2 therein.

Specifically, the wireless communication device 221 performs the aforementioned operations (a) to (e). Note that the aforementioned operations (a) to (e) are performed by the wireless communication device 221 by replacing the term "the wireless communication device 210" by the term "the wireless communication device 220", and by replacing the term "the various IP addresses" by the term "the various IP addresses 2".

### (3) Operation when All Allocatable IP Addresses are Allocated (Display Operation)

When the wireless communication devices 210, 220 repeat S10 to S22, allocate all the allocatable IP addresses to the wireless communication devices, and do not hold any of the allocatable IP addresses therein, the wireless communication devices 210, 220 notify the EMS 230 accordingly. Specifically, the wireless communication devices 210, 220 perform the following operations of S40 to S43.

### (S40)

Firstly, in S13, when the information holding unit 205 in the wireless communication devices 210, 220 does not hold any of the allocatable IP addresses therein, the information holding unit 205 outputs a signal indicating that an IP address is already allocated to the allocation functional unit 203.

### (S41)

Then, in response to an input of the signal indicating that an IP address is already allocated, the allocation functional unit 203 in the wireless communication devices 210, 220 does not execute S14, and outputs a packet indicating that an IP address is already allocated to the communication unit 201-1.

In this case, the allocation functional unit 203 in the wireless communication devices 210, 220 outputs a packet indicating that an IP address is already allocated, in which an IP address of the communication unit 201-1 (that is acquired in (c)) is included. The IP address of the communication unit 201-1 is an IP address corresponding to the wireless communication device provided with the allocation functional unit 203.

### (S42)

Then, the wireless communication unit 201-1 in the wireless communication devices 210, 220 outputs the input packet indicating that an IP address is already allocated to the EMS 230.

### (S43)

Then, in response to an input of a packet indicating that an IP address is already allocated, the EMS 230 extracts an IP address corresponding to the wireless communication device from the packet, and displays the extracted IP address on a screen provided in the EMS 230. In this case, the EMS 230 may display a message "The wireless communication device (DHCP server) of the aforementioned IP address used up all the allocated IP addresses" under the IP address.

### (3) Operation when All Allocatable IP addresses are allocated (Operation of Allocating New IP Address)

After checking the display of the EMS 230, the administrator of the wireless communication network in the present exemplary embodiment sets a newly allocatable IP address in the wireless communication device to which all the IP addresses are allocated. The aforementioned operation is implemented when the administrator of the wireless communication network in the present exemplary embodiment performs a predetermined operation on the EMS 230, and when the wireless communication network in the present exemplary embodiment executes the following S44 to S46.

### (S44)

Firstly, when a predetermined operation is performed by the administrator of the wireless communication network in the present exemplary embodiment, the EMS 230 extracts an IP address of the communication unit 201-1 from the input packet indicating that an IP address is already allocated.

### (S45)

Then, the EMS 230 outputs, to the communication unit 201-1 corresponding to an extracted IP address, various IP addresses (hereinafter, referred to as "various IP addresses 3"), in which the number of allocatable IP addresses is larger than the number of various IP addresses 1, 2, as a packet.

Note that various IP addresses 3 are set in advance in the EMS 230 by the administrator of the wireless communication network in the present exemplary embodiment.

### (S46)

Then, in response to an input of a packet from the EMS 230, the communication unit 201-1 in the wireless communication device 210 performs the aforementioned operation (a) described in S31. Thereafter, each functional unit in the wireless communication device 210 performs the aforementioned operations (b) to (e) described in S31. Note that each functional unit in the wireless communication device 210 performs the operations (b) to (e) described in S31 by replacing the term "the various IP addresses 1" by the term "the various IP addresses 3". Note that the information holding unit 205 in the wireless communication device 210 executes the following operation (e') in place of the aforementioned operation (e) so that an already allocated IP address is not held.

### (e')

In response to an input of allocatable IP addresses from the allocation functional unit 203, the information holding unit 205 reads a stored IP address that is already allocated in S18. The information holding unit 205 extracts an IP address except for the (read) IP address that is already allocated, out of the input allocatable IP addresses, and stores the extracted IP address as a newly allocatable IP address.

As a result of S44 to S46, in the wireless communication network in the present exemplary embodiment, it is possible to set a newly allocatable IP address in the wireless communication device which allocated all the IP addresses.

The other operations are the same as the operations in the first exemplary embodiment, and therefore, detailed description thereof is omitted herein.

### [Description on Advantageous Effects]

According to the wireless communication network in the present exemplary embodiment, it is possible to set various IP addresses from the EMS 230 in the wireless communication device provided with a DHCP function.

The reason for this is that the EMS outputs various IP addresses to the wireless communication device provided with a DHCP function as a packet, and the wireless communication device provided with a DHCP function extracts various IP addresses from the packet input from the EMS 230 and sets the extracted various IP addresses therein.

### [Third Embodiment]

Next, the third exemplary embodiment of the present invention is described.

### [Description on Configuration]

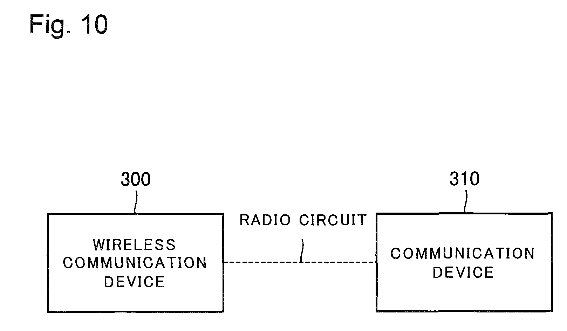

Fig. 10 is a diagram illustrating a configuration example of a wireless communication network in the third exemplary embodiment of the present invention.

As illustrated in Fig. 10, in the wireless communication network in the third exemplary embodiment, the wireless communication device 300 is connected to a communication device 310 that serves as the other communication device via a radio link.

In the wireless communication network in the present exemplary embodiment, the other communication device is not limited to the communication device 310. In other words, two or more other communication devices may be provided in the wireless communication network in the present exemplary embodiment.

After activation, the wireless communication device 300 performs point-to-point wireless communication with at least one of the other communication devices (i.e. the communication device 310). In response to an input of a predetermined signal, the wireless communication device 300 allocates a predetermined identification number to the other communication device 310.

The predetermined identification number is a predetermined IP address, and is set in the wireless communication device 300 by the administrator of the wireless communication network in the present exemplary embodiment.

Note that the other communication device 310 may be a device which outputs the aforementioned predetermined signal when the other communication device 310 performs point-to-point wireless communication with the wireless communication device 300 after activation.

### [Description on Operation]

Firstly, after activation, the wireless communication device 300 performs point-to-point wireless communication with at least one of the other communication devices (i.e. the communication device 310).

Then, when the other communication device 310 performs point-to-point wireless communication with the wireless communication device 300, the other communication device 310 outputs a predetermined signal to the wireless communication device 300.

Then, in response to an input of a predetermined signal from the other communication device 310, the wireless communication device 300 allocates a predetermined identification number to the other communication device 310.

The identification number may be an IP address.

### [Description on Advantageous Effects]

According to the present exemplary embodiment, a wireless communication network is advantageous in sufficiently reducing the cost required to form a new network. This is because in the wireless communication network in the present exemplary embodiment, it is not necessary to additionally provide a DHCP server, because the wireless communication device itself is provided with the function of a DHCP server.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese Patent Application No. 2013-270781 filed on December 27, 2013, the disclosure of which is incorporated herein in its entirety by reference.

The whole or part of the exemplary embodiments disclosed above can be described as, but not limited to, the following supplementary notes.

### (Supplementary Note 1)

A wireless communication device which performs point-to-point wireless communication with at least one of other communication devices, wherein
in response to an input of a predetermined signal, a predetermined identification number is allocated to the other communication device.

### (Supplementary Note 2)

The wireless communication device according to Supplementary Note 1, wherein
in response to an input of the predetermined signal from the other communication device, the predetermined identification number is allocated to the other communication device.

### (Supplementary Note 3)

The wireless communication device according to any one of Supplementary Notes 1 and 2, comprising:
a communication means which receives the predetermined signal from the other communication device, wherein
when the predetermined communication means receives the predetermined signal, the predetermined identification number is allocated to the other communication device via the predetermined communication means.

### (Supplementary Note 4)

The wireless communication device according to any one of Supplementary Notes 1 and 2, comprising:
a communication means which receives the predetermined signal from the other communication device, wherein
when the communication means receives the predetermined signal, and when a first network part and a second network part are different from each other, the first network part being a network part of a predetermined IP address allocated to the communication means that received the predetermined signal, the second network part being a network part of a predetermined IP address allocated to a default gateway, the predetermined identification number is allocated to the other communication device via the communication means that received the predetermined signal.

### (Supplementary Note 5)

The wireless communication device according to Supplementary Note 4, wherein
a plurality of the communication means are included, and
when the first network part and the second network part are the same, a communication means outputs the predetermined signal, the communication means being a communication means other than the communication means that received the predetermined signal and having an IP address whose network part equivalent to the first network part.

### (Supplementary Note 6)

A wireless communication network, comprising:
the wireless communication device of any one of Supplementary Notes 1 to 5, wherein
the wireless communication device is an allocating wireless communication device.

### (Supplementary Note 7)

The wireless communication network according to Supplementary Note 6, further comprising:
a monitor device, wherein
the monitor device outputs the predetermined identification number held therein to the allocating wireless communication device, and
the allocating wireless communication device holds the predetermined identification number thus input.

### (Supplementary Note 8)

The wireless communication network according to any one of Supplementary Notes 6 and 7, further comprising:
a second network portion in which a second allocating wireless communication device is interposed between a radio link and the first other communication device of a first first network portion, the first network portion being such that the first other communication device, the radio link, and the first allocating wireless communication device are connected in this order, wherein
number of radio links in the second network portion is equal to number of radio links in the first network portion, and
in response to an input of the predetermined signal, at least the second allocating wireless communication device allocates the predetermined identification number to the first other communication device.

### (Supplementary Note 9)

An identification-number setting method for a wireless communication means which performs point-to-point wireless communication with at least one of other communication means, the method comprising:
in response to an input of a predetermined signal, allocating a predetermined identification number to the other communication means.

### (Supplementary Note 10)

The identification-number setting method according to Supplementary Note 9, wherein
in response to an input of the predetermined signal from the other communication means, the predetermined identification number is allocated to the other communication means.

### (Supplementary Note 11)

The identification-number setting method according to any one of Supplementary Notes 9 to 10, wherein
the wireless communication means is means including a transmitting and receiving means which receives the predetermined signal from the other communication means, and
when the predetermined transmitting and receiving means receives the predetermined signal, the predetermined identification number is allocated to the other communication means via the predetermined transmitting and receiving means.

### (Supplementary Note 12)

The identification-number setting method according to any one of Supplementary Notes 9 and 10, wherein
the wireless communication means is means including a transmitting and receiving means which receives the predetermined signal from the other communication means, wherein
when the transmitting and receiving means receives the predetermined signal, and when a first network part and a second network part are different from each other, the first network part being a network part of a predetermined IP address allocated to the transmitting and receiving means that received the predetermined signal, the second network part being a network part of a predetermined IP address allocated to a default gateway, the predetermined identification number is allocated to the other communication means via the transmitting and receiving means that received the predetermined signal.

### (Supplementary Note 13)

The identification-number setting method according to Supplementary Note 12, wherein
the wireless communication means is means including a plurality of the transmitting and receiving means, and
when the first network part and the second network part are the same, the predetermined signal is output by the transmitting and receiving means other than the transmitting and receiving means that received the predetermined signal, the transmitting and receiving means having an IP address whose network part is the first network part.

### (Supplementary Note 14)

The wireless communication device according to any one of Supplementary Notes 1 to 5, wherein
the identification number is an IP address.

### (Supplementary Note 15)

The wireless communication network according to any one of Supplementary Notes 6 to 8, wherein
the identification number is an IP address.

### (Supplementary Note 16)

The identification-number setting method according to any one of Supplementary Notes 9 to 13, wherein
the identification number is an IP address.

### (Supplementary Note 17)

A communication device provided with a wireless communication means which preforms point-to-point wireless communication, the communication device comprising:
a receiving means which receives a request signal requesting allocation of an IP address from another communication device; and
a transmission means which transmits, to the another communication device, an IP address allocation signal including an IP address to be allocated to the another communication device.

### (Supplementary Note 18)

The communication device according to Supplementary Note 17, further comprising:
a plurality of communication means including the wireless communication means, wherein
when the wireless communication means out of the communication means receives the request signal, the communication device transmits the IP address allocation signal from the wireless communication means, and
when the communication means other than the wireless communication means receives the request signal, the communication device transmits does not transmit the IP address allocation signal.

### (Supplementary Note 19)

A wireless communication network, including:
a second network portion in which a second second-type wireless communication device is interposed between a radio link and a first first-type wireless communication device of a first network portion, the first network portion being such that the first first-type wireless communication device, the radio link, and a first second-type wireless communication device are connected in this order, wherein
number of radio links in the second network portion is equal to number of radio links in the first network portion, and
in response to an input of a predetermined signal, at least the second second-type wireless communication device allocates a predetermined identification number to the first first-type wireless communication device.

### (Supplementary Note 20)

The wireless communication network according to Supplementary Note 19, wherein
the wireless communication network is provided with at least one of the first-type wireless communication devices including the first first-type wireless communication device, and
in response to an input of the predetermined signal from the predetermined first-type wireless communication device, each of the second-type wireless communication devices allocates the predetermined identification number to the predetermined first-type wireless communication device.

### (Supplementary Note 21)

The wireless communication network according to Supplementary Note 20, wherein
the second-type wireless communication device includes a communication means which receives the predetermined signal for each of the first-type wireless communication devices to be connected, and
when the communication means receives the predetermined signal, and when a first network part and a second network part are different from each other, the first network part being a network part of a predetermined IP address allocated to the communication means that received the predetermined signal, the second network part being a network part of a predetermined IP address allocated to a default gateway, the second-type wireless communication device allocates the predetermined identification number to the first-type wireless communication device to be connected to the communication means that received the predetermined signal.

### (Supplementary Note 22)

The wireless communication network according to Supplementary Note 21, wherein
when the first network part and the second network part are the same, the second-type wireless communication device causes the communication means to output the predetermined signal, the communication means being the communication means other than the communication means that received the predetermined signal, and having an IP address whose network part equivalent to the first network part.

### (Supplementary Note 23)

The wireless communication network according to any one of Supplementary Notes 19 to 22, including:
a monitor device, wherein
the monitor device outputs the predetermined identification numbers held therein to the second-type wireless communication device, and
the second-type wireless communication device holds the predetermined identification numbers thus input.

### (Supplementary Note 24)

The wireless communication network according to Supplementary Note 23, wherein
the second-type wireless communication device stores the predetermined identification number allocated to the first-type wireless communication device, as an identification number that is already allocated, and holds the predetermined identification number except for the identification number that is already allocated, out of the predetermined identification numbers input from the monitor device.

### [Reference signs List]

1, 2 Network
10, 11, 12, 13, 20, 21, 210, 220, 300, 513 Wireless communication device
30, 230 EMS
40, 41, 520, 521 Radio link
101-i, 201-i Communication unit
102, 202 Wireless communication unit
103, 203 Allocation functional unit
104 Allocation grasping unit
105, 205 Information holding unit
310 Communication device
501 Router
502 Wireless LAN access point terminal
503-1, 503-2, 503-3 Wireless LAN terminal
504 DHCP server
505-1, 505-2, 505-3 DHCP client functional unit
506 Wireless LAN

## Claims

1. A wireless communication device which performs point-to-point wireless communication with at least one of other communication devices, wherein
in response to an input of a predetermined signal, a predetermined identification number is allocated to the other communication device.

2. The wireless communication device according to claim 1, wherein
in response to an input of the predetermined signal from the other communication device, the predetermined identification number is allocated to the other communication device.

3. The wireless communication device according to any one of claims 1 and 2, comprising:
a communication means which receives the predetermined signal from the other communication device, wherein
when the predetermined communication means receives the predetermined signal, the predetermined identification number is allocated to the other communication device via the predetermined communication means.

4. The wireless communication device according to any one of claims 1 and 2, comprising:
a communication means which receives the predetermined signal from the other communication device, wherein
when the communication means receives the predetermined signal, and when a first network part and a second network part are different from each other, the first network part being a network part of a predetermined IP address allocated to the communication means that received the predetermined signal, the second network part being a network part of a predetermined IP address allocated to a default gateway, the predetermined identification number is allocated to the other communication device via the communication means that received the predetermined signal.

5. The wireless communication device according to claim 4, wherein
a plurality of the communication means are included, and
when the first network part and the second network part are the same, a communication means outputs the predetermined signal, the communication means being a communication means other than the communication means that received the predetermined signal and having an IP address whose network part equivalent to the first network part.

6. A wireless communication network, comprising:
the wireless communication device of any one of claims 1 to 5, wherein
the wireless communication device is an allocating wireless communication device.

7. The wireless communication network according to claim 6, further comprising:
a monitor device, wherein
the monitor device outputs the predetermined identification number held therein to the allocating wireless communication device, and
the allocating wireless communication device holds the predetermined identification number thus input.

8. The wireless communication network according to any one of claims 6 and 7, further comprising:
a second network portion in which a second allocating wireless communication device is interposed between a radio link and the first other communication device of a first first network portion, the first network portion being such that the first other communication device, the radio link, and the first allocating wireless communication device are connected in this order, wherein
number of radio links in the second network portion is equal to number of radio links in the first network portion, and
in response to an input of the predetermined signal, at least the second allocating wireless communication device allocates the predetermined identification number to the first other communication device.

9. An identification-number setting method for a wireless communication means which performs point-to-point wireless communication with at least one of other communication means, the method comprising:
in response to an input of a predetermined signal, allocating a predetermined identification number to the other communication means.

10. The identification-number setting method according to claim 9, wherein
in response to an input of the predetermined signal from the other communication means, the predetermined identification number is allocated to the other communication means.

11. The identification-number setting method according to any one of claims 9 to 10, wherein
the wireless communication means is means including a transmitting and receiving means which receives the predetermined signal from the other communication means, and
when the predetermined transmitting and receiving means receives the predetermined signal, the predetermined identification number is allocated to the other communication means via the predetermined transmitting and receiving means.

12. The identification-number setting method according to any one of claims 9 and 10, wherein
the wireless communication means is means including a transmitting and receiving means which receives the predetermined signal from the other communication means, wherein
when the transmitting and receiving means receives the predetermined signal, and when a first network part and a second network part are different from each other, the first network part being a network part of a predetermined IP address allocated to the transmitting and receiving means that received the predetermined signal, the second network part being a network part of a predetermined IP address allocated to a default gateway, the predetermined identification number is allocated to the other communication means via the transmitting and receiving means that received the predetermined signal.

13. The identification-number setting method according to claim 12, wherein
the wireless communication means is means including a plurality of the transmitting and receiving means, and
when the first network part and the second network part are the same, the predetermined signal is output by the transmitting and receiving means other than the transmitting and receiving means that received the predetermined signal, the transmitting and receiving means having an IP address whose network part is the first network part.

14. The wireless communication device according to any one of claims 1 to 5, wherein
the identification number is an IP address.

15. The wireless communication network according to any one of claims 6 to 8, wherein
the identification number is an IP address.

16. The identification-number setting method according to any one of claims 9 to 13, wherein
the identification number is an IP address.

17. A communication device provided with a wireless communication means which preforms point-to-point wireless communication, the communication device comprising:
a receiving means which receives a request signal requesting allocation of an IP address from another communication device; and
a transmission means which transmits, to the another communication device, an IP address allocation signal including an IP address to be allocated to the another communication device.

18. The communication device according to claim 17, further comprising:
a plurality of communication means including the wireless communication means, wherein
when the wireless communication means out of the communication means receives the request signal, the communication device transmits the IP address allocation signal from the wireless communication means, and
when the communication means other than the wireless communication means receives the request signal, the communication device transmits does not transmit the IP address allocation signal.
